# FASCICULE DE BREVET EUROPEEN

(11) **EP 3 353 237 B1**
(45) Date de publication et mention de la délivrance du brevet: **08.05.2024**
(21) Numéro de dépôt: 16781513.3
(22) Date de dépôt: 20.09.2016
(51) Int. Cl.: C08K 5/151, C08J 3/09, C08K 5/41, C08L 27/16, C08L 75/04, C08L 81/06

(54) **SYSTEME DE SOLVANTS COMPRENANT UN MELANGE DE DIMETHYLSULFOXYDE ET D'AU MOINS UNE LACTONE**
LÖSUNGSMITTELSYSTEM MIT EINER MISCHUNG AUS DIMETHYLSULFOXID UND MINDESTENS EINEM LACTON
SOLVENT SYSTEM COMPRISING A MIXTURE OF DIMETHYL SULFOXIDE AND AT LEAST ONE LACTONE

(30) Priorité: 21.09.2015 FR 1558878
(43) Date de publication de la demande: 01.08.2018
(73) Titulaire: Arkema France, 92700 Colombes (FR)
(72) Inventeur: SCHMITT, Paul Guillaume, 64230 Lescar (FR)
(74) Mandataire: Arkema Patent
(86) Numéro de dépôt international: PCT/FR2016/052376
(87) Numéro de publication internationale: WO 2017/051107

(56) Documents cités:
- EP-A1- 2 718 352
- EP-A1- 3 045 488
- JP-A- 2013 102 004
- US-A- 3 527 653
- US-A- 6 146 815
- DATABASE CA [Online] CHEMICAL ABSTRACTS SERVICE, COLUMBUS, OHIO, US; LI, HONGFEI ET AL: "Molding PVF films by gelation-flow-casting method", XP002759991, extrait de STN Database accession no. 2006:998044 & LI, HONGFEI ET AL: "Molding PVF films by gelation-flow-casting method", SULIAO GONGYE , 33(8), 25-28 CODEN: SUGOF9; ISSN: 1005-5770, 2005,

## Description

La présente invention concerne le domaine des solvants de polymères utilisables notamment pour la fabrication de films, de membranes, de cuirs artificiels, de daims polymères, de fibres polymères, de revêtements, de circuits électroniques, de batteries, notamment lithium-ion (Li-ion), ou pour la protection de câbles électriques par gainage.

Les polymères concernés par ces applications variées sont les polymères fluorés ou les polymères comprenant au moins une double liaison X=O, X étant choisi parmi l'atome de soufre, l'atome de carbone, un groupement N-C et un groupement O-C. Plus précisément, les polymères concernés sont les polyuréthanes (PU), les polyéthersulfones (PES), les polysulfones (PSU), les poly(fluorures de vinylidène), les acétates de cellulose, les polyesters, les polyamides, les polyamide-imides et les polyimides.

Ces polymères sont aujourd'hui largement utilisés par exemple pour leurs propriétés de résistances mécanique et chimique ou encore leurs propriétés extensibles. Les polymères sont en effet de plus en plus utilisés dans de nombreuses applications.

Parmi ces applications, les plus fréquentes sont celles pour lesquelles les polymères sont sous forme de films, de membranes, de revêtements. En règle générale, les polymères trouvent des applications tout à fait intéressantes lorsqu'ils sont sous forme de films, supportés ou non, dont l'épaisseur varie de quelques dizaines de nanomètres à quelques millimètres. Une autre possibilité est de trouver ces polymères sous forme de fibres creuses.

Pour de telles applications, les polymères doivent tout d'abord être mis en solution, plus ou moins concentrée, les films étant ensuite obtenus par élimination du ou des solvants, par exemple par évaporation ou par extraction à l'aide d'un tiers solvant, ou toute autre méthode connue de l'homme du métier.

Plus particulièrement, la réalisation de ces films nécessite de nombreuses étapes dont notamment :
- la synthèse du polymère en milieu solvant,
- la dissolution du polymère dans un solvant dans le cas où le polymère issu de la synthèse est sous forme solide, comme par exemple des extrudés ou des billes,
- l'obtention d'une solution polymère,
- la réalisation d'un film par un procédé d'enduction de la solution polymère suivi d'un séchage pour évaporer le solvant.

Cette dernière étape peut aussi être substituée par une étape de réalisation d'un film ou d'une fibre creuse par un procédé d'imprégnation sur un support ou de filage de la solution polymère suivi d'une trempe dans un tiers solvant permettant de précipiter le polymère et de faire migrer le solvant de la solution polymère vers le tiers solvant.

De nos jours, les solvants couramment utilisés pour les réalisations de films polymères sont des solvants aprotiques polaires, tels que la N-méthyl-2-pyrrolidone (NMP), le diméthylformamide (DMF) ou le diméthylacétamide (DMAc). Cependant, ces solvants présentent de nombreux inconvénients toxicologiques car ils sont classés en tant qu'agent CMR (Cancérogène, Mutagène ou toxique pour la Reproduction).

Il existe donc un intérêt à substituer ces solvants par des solvants présentant un meilleur profil toxicologique.

Le diméthylsulfoxyde (DMSO) est un solvant aprotique polaire permettant de solubiliser un certain nombre de polymères, et notamment certains grades de poly(fluorure de vinylidène) (PVDF), tels que par exemple les Kynar^{®} et Kynar Flex^{®} commercialisés par la Société Arkema ou encore les Solef^{®}, Hylar^{®}, Halar^{®} ou Hyflon^{®} commercialisés par la Société Solvay. L'utilisation de DMSO permet d'obtenir des solutions de viscosité comparables à celles obtenues avec la NMP. Cependant, pour permettre cette solubilisation, le DMSO doit être chauffé à une température de l'ordre de 50°C, voire supérieure à 50°C.

En outre, il a été observé que certaines solutions de PVDF dans le DMSO ainsi préparées ne sont pas stables dans le temps. En effet, une gélification ou un trouble de la solution a été observé après seulement 1 à 2 jours. Les utilisateurs sont par conséquent contraints de mettre en oeuvre la solution rapidement, et notamment de l'appliquer rapidement afin de réaliser les films requis. Ces inconvénients sont un frein à la substitution de la NMP par le DMSO. En effet, il est connu que le PVDF est couramment solubilisé dans la NMP.

La demande de brevet FR 2 285 227 décrit un procédé d'assemblage de pièces en PVDF par collage, la colle étant une solution diluée de PVDF dans un solvant, ledit solvant pouvant être choisi parmi le DMF, le DMAc, le tétrahydrofurane (THF), le DMSO, la cyclohexanone (CyHone), l'hexaméthylphosphoramide (HMPA), la butyrolactone, et leurs mélanges. Un exemple montre effectivement que le PVDF peut être solubilisé dans le DMF, mais à une température de 60°C.

Le brevet EP 0 639 106 B1 enseigne la préparation de membranes en utilisant des mélanges de solvant/co-solvant permettant de mettre en solution des PVDF à toutes températures. Bien que de nombreux mélanges possibles soient proposés, il ressort clairement de cet enseignement que seuls les mélanges à base de NMP et de DMF ou d'acétate de n-butyle sont efficaces et sont les seuls à être exemplifiés.

La demande de brevet EP 0 223 709 A2 décrit également un procédé de préparation de membranes poreuses par dissolution d'un polymère fluoré dans un solvant. Les solvants adaptés pour ce procédé sont choisis parmi les cétones, les éthers, les amides et les sulfoxydes, ainsi que leurs mélanges. Le meilleur solvant est indiqué être le mélange acétone/DMF, ce qui est confirmé par les exemples qui n'illustrent que ce seul mélange de solvants. En outre, ces exemples enseignent que la dissolution doit être effectuée à chaud et que la solution de polymère doit être utilisée immédiatement.

Le brevet EP 0 574 957 B1 décrit des membranes composites acrylonitrile-PVDF utilisables dans des opérations de séparation. Les polymères constitutifs des membranes peuvent être solubilisés dans un solvant choisi parmi la NMP, le DMF, le DMSO, le HMPA, le DMAc, le dioxane, et leurs mélanges, éventuellement en présence de co-solvants choisis parmi l'acétone, le méthanol, l'éthanol, le formamide, l'eau ou la méthyléthylcétone. Les exemples présentés montrent uniquement des membranes polyacrylonitrile (PAN) et leurs bonnes résistances aux attaques de solvants tels que la NMP, le DMF, le DMSO, le toluène, la méthyléthylcétone ou l'acétone.

Le brevet EP 1725703 décrit la fabrication de fibres polymères dans un solvant choisi parmi de nombreux solvants, dont le DMSO et la γ-butyrolactone. Ce document ne laisse en rien présager d'un avantage à utiliser un mélange de DMSO ou de lactone.

Le document JP2013102004 décrit un système solvant contenant de la γ-butyrolactone et du DMSO dans des proportions massiques 6:4.

Le document US 6146815 décrit des solutions de polyimides comprenant 30-70% en poids de DMSO, 30-70% en poids de γ-butyrolactone et 5-12% en poids d'eau.

Le document EP 3045488 décrit des solutions de polyimide ou de polyamide comprenant un système solvant comprenant 10-80% en poids de DMSO, 10-80% en poids de triéthylphosphate et de 10-80% en poids de γ-butyrolactone.

Le brevet KR100868536 décrit la fabrication de daim textile en polyuréthane à partir d'une solution polymère à base de DMSO.

Le brevet JP1266811 décrit la fabrication de membranes en fibres creuses de polyéthersulfone à partir de solutions polymères contenant du DMSO.

Le brevet WO2012/173938 décrit la fabrication de polyols pouvant servir à réaliser des polyuréthanes ou des pré-polymères polyuréthane contenant encore des polyols. Pour utiliser ces pré-polymères, il est indiqué que l'ajout d'un solvant est possible. Le DMSO et certaines lactones sont entre autres cités. Ce document ne laisse en rien présager d'un avantage à utiliser un mélange de DMSO ou de lactone.

Le brevet EP1578521 décrit la fabrication de membranes en fibres creuses à base de polymères hydrophobe (tel que la polyéthersulfone) et hydrophile (tel que la polyvinylpyrrolidone). Le DMSO et la butyrolactone, seuls ou en mélange, sont cités comme solvants potentiels de polymères. Ce document ne laisse en rien présager d'un avantage à utiliser un mélange de DMSO ou de lactone.

Par ailleurs, il est connu, que le DMSO seul ou la butyrolactone seule permet de dissoudre de nombreux polymères tels que certains polyuréthanes, polyéthersulfones ou polysulfones en chauffant ces solutions vers 50°C pendant plusieurs heures, mais les solutions polymères obtenues gélifient très rapidement après un retour aux températures de travail (de 0 à 20°C). Cependant, aucun document de l'art antérieur ne semble montrer d'avantages à utiliser des mélanges comprenant du DMSO et une ou plusieurs lactones.

Ainsi, parmi ces techniques connues aujourd'hui de l'art antérieur, aucune d'entre elles n'est satisfaisante, car aucune d'entre elles ne peut s'imposer comme une technique pour laquelle les systèmes solvants de polymères fluorés ou de polymères comprenant au moins une double liaison X=O, X étant choisi parmi l'atome de soufre, l'atome de carbone, un groupement N-C et un groupement O-C, peuvent avantageusement remplacer les solvants de référence que sont la NMP, le DMF et le DMAc.

Les techniques de l'art antérieur enseignent que les solutions obtenues ne sont pas stables dans le temps. En effet, elles ont tendance à se gélifier que ce soit à température ambiante ou à la température de mise en forme de la solution polymère. Ce problème de stabilité des solutions polymères implique qu'il est très difficile de mettre en oeuvre un procédé industriel sans adaptation significative dudit procédé.

Ainsi, un des objectifs de la présente invention est de proposer un système solvant, qui ne présente pas les inconvénients précités et rencontrés dans l'art antérieur.

Plus spécifiquement, un premier objectif de la présente invention est de proposer un système solvant moins toxique que la NMP, le DMF et le DMAc, en particulier faiblement toxique, voire non toxique.

Un autre objectif encore est de proposer un système solvant de polymères fluorés ou de polymères comprenant au moins une double liaison X=O, X étant choisi parmi l'atome de soufre, l'atome de carbone, un groupement N-C et un groupement O-C, conduisant à des solutions stables dans le temps, c'est-à-dire des solutions dont la stabilité dans le temps est suffisante pour permettre une utilisation industrielle, c'est à dire sur plusieurs semaines, voire similaire à celle obtenue avec des solutions dans la NMP, le DMF et le DMAc et de manière générale plus stable qu'avec les solvants connus de l'art antérieur, tels que la NMP, le DMSO, les cétones ou le DMAC.

Il a maintenant été découvert que les objectifs précités peuvent être atteints, en totalité ou au moins en partie, grâce au système solvant de la présente invention.

L'invention a donc pour objet l'utilisation d'un système solvant comme définie dans la revendication 1.

Il a en effet été découvert, de manière surprenante, que le système solvant selon l'invention permettait l'obtention de solutions de polymères fluorés ou de polymères comprenant au moins une double liaison X=O, X étant choisi parmi l'atome de soufre, l'atome de carbone, un groupement N-C et un groupement O-C, en particulier les polyuréthanes, les polyéthersulfones et les polysulfones, stables dans le temps. De manière surprenante, les solutions de polymères obtenues avec le système solvant selon l'invention sont beaucoup plus stables que les solutions de polymères obtenues avec le DMSO seul ou une lactone seule.

L'invention a pour objet l'utilisation du système solvant tel que défini précédemment pour la solubilisation de polymères fluorés ou de polymères comprenant au moins une double liaison X=O, X étant choisi parmi l'atome de soufre, l'atome de carbone, un groupement N-C et un groupement O-C, en particulier les polyuréthanes, les polyéthersulfones et les polysulfones.

Enfin, l'invention concerne l'utilisation du système solvant selon l'invention pour la fabrication de films, de cuirs artificiels, de daims polymères, de fibres polymères, de revêtements, de membranes, de batteries, de circuits électroniques, pour la protection de câbles électriques.

D'autres avantages et caractéristiques de l'invention apparaîtront plus clairement à l'examen de la description détaillée.

Il est par ailleurs précisé que les expressions « compris entre... et... » et « de... à... » utilisées dans la présente description doivent s'entendre comme incluant chacune des bornes mentionnées.

Le système solvant de la présente invention comprend de 5 à 95% en poids d'une composition (A) comprenant du DMSO, par rapport au poids total du système solvant.

Selon un mode de réalisation particulier, la composition (A) comprend le DMSO seul.

Par DMSO seul, ou plus simplement DMSO, on entend que la composition (A) comprend plus de 80% en poids, de préférence plus de 90% en poids, de préférence encore plus de 95% en poids de DMSO, par rapport au poids total de la composition, le reste pouvant être constitué d'impuretés inhérentes à la fabrication du DMSO, après purification éventuelle (comme décrit dans WO 1997/019047, EP 0 878 454, EP 0 878 466), et/ou d'agents odorants (comme décrit dans WO 2011/012820), et/ou tous autres additifs connus de l'homme du métier, tels que, par exemple et à titre non limitatif, les stabilisants, les colorants, les agents anti-UV, les conservateur ou les biocides.

Le système solvant selon l'invention comprend de 5 à 95% en poids d'une composition (B) comprenant au moins une lactone, par rapport au poids total du système solvant.

De manière préférée, la lactone comprend de 4 à 12 atomes de carbone, ladite lactone étant saturée ou non, et éventuellement substituée par une ou plusieurs chaînes alkyles en C₁-C₁₀.

De préférence, la lactone est choisie parmi la γ-butyrolactone, la γ-pentalactone, la γ-hexalactone, la γ-octalactone, la δ-octalactone, la γ-décalactone, la δ-décalactone, le γ-dodécalactone, la δ-dodécalactone, la 6-amyl-α-pyrone, la δ-valérolactone, la γ-valérolactone, la ε-caprolactone, la coumarine, l'acide ascorbique, et les mélanges de deux ou plusieursd'entre elles en toutes proportions.

La lactone, ou le mélange de lactones, présente préférentiellement un point d'ébullition compris entre 150 et 250°C, avantageusement à pression atmosphérique.

De manière préférée, ladite lactone est soluble dans l'eau.

On entend au sens de la présente invention qu'une lactone est soluble dans l'eau lorsqu'au moins 30 g, de préférence 50 g, de préférence encore 100 g de lactone(s) sont dissous dans un litre d'eau à 20°C et à pression atmosphérique, c'est-à-dire qu'une solution homogène (c'est-à-dire une seule phase liquide) est obtenue après 30 mn d'agitation.

A titre tout particulièrement préféré, la lactone est choisie parmi la γ-butyrolactone (GBL) et la γ-valérolactone (GVL).

De préférence, le système solvant selon l'invention comprend de 30 à 80% en poids d'une composition (A) comprenant du DMSO, plus préférentiellement de 30 à 65% en poids, par rapport au poids total du système solvant.

De préférence, le système solvant selon l'invention comprend de 20 à 70% en poids d'une composition (B) comprenant au moins une lactone, plus préférentiellement de 35 à 70% en poids, par rapport au poids total du système solvant.

De manière préférée, lorsque le système solvant selon l'invention comprend de 30 à 80% en poids d'une composition (A) comprenant du DMSO, par rapport au poids total du système solvant, alors ledit système comprend de 20 à 70% en poids d'une composition (B) comprenant au moins une lactone, par rapport au poids total du système solvant.

Avantageusement, lorsque le système solvant selon l'invention comprend de 30 à 65% en poids d'une composition (A) comprenant du DMSO, par rapport au poids total du système solvant, alors ledit système comprend de 35 à 70% en poids d'une composition (B) comprenant au moins une lactone par rapport au poids total du système solvant.

De manière très surprenante, la combinaison du DMSO et d'au moins une lactone en une proportion spécifique conduit à de meilleurs résultats que ceux observés lors de la dissolution notamment de polyuréthanes, de polyéthersulfones ou de polysulfones dans le DMSO uniquement ou dans une lactone seule, lesdits résultats s'entendant en termes de stabilité dans le temps.

Dans un mode de réalisation de l'invention, on préfère une lactone, ou un mélange de lactones, ayant un point d'ébullition proche de celui du DMSO, plus précisément proche de celui de la composition (A) .

Dans un autre mode de réalisation, on préfère une lactone, ou un mélange de lactones, formant un azéotrope avec le DMSO ou avec la composition (A).

Dans ces deux modes de réalisation préférés, l'élimination du système solvant du polymère, dans lequel il est dissous, sera facilitée, la composition (A) et la composition (B) pouvant ainsi être éliminées simultanément par chauffage, évaporation ou tout autre moyen connu de l'homme du métier.

Un autre avantage lié aux points d'ébullition voisins ou identiques de la composition (A) et de la composition (B) ou encore lié à la formation d'un azéotrope entre la composition (A) et la composition (B) est leur facilité de purification et leur recyclabilité beaucoup plus aisée.

Dans un autre mode de réalisation de l'invention, on préfère une lactone, ou un mélange de lactones, soluble(s) dans l'eau.

Dans ce mode de réalisation préféré, l'élimination du système solvant du polymère, dans lequel il est dissous, sera facilitée, la composition (A) et la composition (B) pouvant ainsi être éliminées simultanément par trempe dans un bain d'eau ou toute autre technique de coagulation ou inversion de phase connue de l'homme du métier.

Selon un mode de réalisation de l'invention, le système solvant comprend de 0 à 20% en poids d'un ou plusieurs solvants additionnels, par rapport au poids total du système solvant, choisis parmi l'eau ; les cétones, de préférence choisies parmi l'acétone, la méthyléthylcétone, la méthylisobutylcétone, l'hexanone, la cyclohexanone, l'éthylamylcétone, l'isophorone, la triméthylcyclohexanone, et le diacétone alcool ; les amines, de préférence choisies parmi la monoéthanolamine, la diéthanolamine, la propanolamine, la butyl-iso-propanolamine, l'iso-propanolamine, le 2-[2-(3-amino-propoxy)éthoxy]éthanol, la N-2-hydroxyéthyldiéthylènetriamine, la (3-méthoxy)-propylamine, la 3-isopropoxypropylamine, la monoéthylamine, la diéthylamine, la diéthylaminopropylamine, la triéthylamine ; les nitriles, par exemple l'acétonitrile ; les alcools, de préférence choisis parmi l'éthanol, le méthanol, le propanol, l'isopropanol, le glycérol, le butanol, le méthylisobutylcarbinol, l'hexylèneglycol, et l'alcool benzylique ; les éthers, de préférence choisis parmi le tétrahydrofurane, le méthylfurane, le méthyltétrahydrofurane, le tétrahydropyrane, et le glycoldialkyléther ; les esters, de préférence choisis parmi les esters dibasiques, le glutarate de diméthyle, le succinate de diméthyle, l'adipate de diméthyle, l'acétate de butyle, l'acétate d'éthyle, le carbonate de diéthyle, le carbonate de diméthyle, le propylène carbonate, le carbonate d'éthyle et de méthyle, le carbonate de glycérol, le diméthyl-2-méthylglutarate, le diméthyl-2-methyladipate, le diméthyl-2-méthylsuccinate, le propionate de N-butyle, l'acétate de benzyle, et l'éthyléthoxypropionate ; les sulfones, de préférence choisies parmi la diméthylsulfone et le sulfolane ; les solvants aromatiques choisis parmi le toluène et le xylène ; les acétals, de préférence choisis parmi le méthylal, l'éthylal, le butylal, le dioxolane, et le 2,5,7,10-tétraoxaundécane (TOU) ; la N-butylpyrrolidone ; la N-isobutylpyrrolidone ; la N-t-butylpyrrolidone ; la N-n-pentylpyrrolidone ; la N-(méthyl-substitué butyl)pyrrolidone ; la N-propyl- ou N-butyl-pyrrolidone dont le noyau est méthyl-substitué ou la N-(méthoxypropyl)pyrrolidone ; le dipropylène glycol diméthyl éther ; le polyglyme ; l'éthyl diglyme ; le 1,3-dioxolane ; et le méthyl-5(diméthylamino)-2-méthyl-5-oxopentanoate.

Avantageusement, les solvants additionnels ont un point d'ébullition proche de celui du DMSO, plus précisément proche de celui de la composition (A), ou proche de celui du système solvant selon l'invention. Les solvants additionnels peuvent préférentiellement former un azéotrope avec le système solvant selon l'invention.

Dans ce mode de réalisation préféré, l'élimination du système solvant du polymère, dans lequel il est dissous, sera facilitée, comme exposé ci-dessus. La présence du solvant additionnel ne change en rien la méthode d'élimination du système solvant.

Les solvants additionnels présentent préférentiellement un point d'ébullition compris entre 150 et 250°C, avantageusement à pression atmosphérique.

Avantageusement, ledit solvant additionnel est soluble dans l'eau.

On entend au sens de la présente invention qu'un solvant additionnel est soluble dans l'eau lorsqu'au moins 30 g, de préférence 50 g, de préférence encore 100 g de ce solvant additionnel est dissous dans un litre d'eau à 20°C et à pression atmosphérique, c'est-à-dire qu'une solution homogène (c'est-à-dire une seule phase liquide) est obtenue après 30 mn d'agitation.

Selon un autre aspect, l'invention concerne l'utilisation d'au moins un système solvant tel que défini précédemment, pour la solubilisation de polymères fluorés ou de polymères comprenant au moins une double liaison X=O, X étant choisi parmi l'atome de soufre, l'atome de carbone, un groupement N-C et un groupement O-C, en particulier les polyuréthanes, les polyéthersulfones et les polysulfones.

Préférentiellement, les polymères sont choisis parmi les polyuréthanes, les polyéthersulfones, les polysulfones, les poly(fluorures de vinylidène), les acétates de cellulose, les polyesters, les polyamides, les polyamide-imides et les polyimides.

Plus préférentiellement, les polymères sont choisis parmi les polyuréthanes, les polyéthersulfones et les polysulfones.

Selon encore un autre aspect, la présente invention concerne le procédé de solubilisation d'un polymère fluoré ou d'un polymère comprenant au moins une double liaison X=O, X étant choisi parmi l'atome de soufre, l'atome de carbone, un groupement N-C et un groupement O-C, en particulier les polyuréthanes les polyéthersulfones et les polysulfones, comprenant au moins une étape de mise en contact dudit polymère avec au moins un système solvant tel que précédemment défini.

Cette mise en contact est effectuée de préférence sous agitation, à température ambiante ou à une température comprise entre la température ambiante et 90°C, de préférence entre la température ambiante et 80°C, de préférence encore entre la température ambiante et 70°C. Le polymère peut être mis en contact avec au moins un système solvant selon l'invention sous toute forme, mais pour des raisons de rapidité de la dissolution, on préfère que ledit polymère soit sous forme de poudre ou de granulés.

Le système solvant selon la présente invention est tout à fait adapté pour la solubilisation de polymères fluorés ou de polymères comprenant au moins une double liaison X=O, X étant choisi parmi l'atome de soufre, l'atome de carbone, un groupement N-C et un groupement O-C, en particulier les polyuréthanes, les polyéthersulfones et les polysulfones. En d'autres termes, le système solvant de l'invention permet l'obtention de solutions de polymères, qui sont limpides et stables dans le temps.

La quantité de polymère(s), qui peut être dissoute, dans le système solvant de l'invention varie dans de grandes proportions, selon la nature du polymère et la nature du système solvant, et est en général comprise entre 1% et 50% en poids, de préférence entre 1% et 40% en poids, de préférence encore entre 1% et 25% en poids, par exemple environ 15% en poids, de polymères fluorés ou de polymères comprenant au moins une double liaison X=O, X étant choisi parmi l'atome de soufre, l'atome de carbone, un groupement N-C et un groupement O-C, en particulier les polyuréthanes, les polyéthersulfones et les polysulfones, par rapport au poids total de la solution finale comprenant ledit polymère et le système solvant.

L'invention concerne également l'utilisation du système solvant tel que défini précédemment, pour la fabrication de films, de cuirs artificiels, de daims polymères, de fibres polymères, de revêtements, de membranes, pour la protection de câbles électriques, et dans la fabrication de batteries et de circuits électroniques.

Pour la préparation de batteries, le système solvant selon l'invention peut comprendre tout type d'additifs et charges habituellement employées pour la synthèse desdites batteries, et notamment du carbone, qu'il soit sous forme de charbon, charbon actif, ou encore sous forme de nano-tubes de carbone (NTC).

D'autres avantages et détails de l'invention apparaîtront plus clairement au vu des exemples donnés ci-dessous uniquement à titre d'illustration et ne présentant aucun caractère limitatif.

### EXEMPLES

### Exemple 1 : solution comprenant du polyuréthane et un système solvant DMSO/GBL

### a) Test de solubilité à T = 70°C et à T ambiante

12,5 % en poids de polyuréthane Desmoderm^{®} KB2H sont introduits dans différents systèmes solvants comprenant du DMSO et de la γ-butyrolactone (GBL), par rapport au poids total de la solution formée par le polymère et le système solvant.

Le mélange est chauffé à 70°C sous une légère agitation. La solubilité des solutions testées est évaluée.

Les solutions sont refroidies à température ambiante et l'aspect des solutions testées est évalué.

Les résultats sont présentés dans le tableau 1 :

**Tableau 1**

| **Solution comprenant 12,5% en poids de PU** | **Système solvant (% massique)** | | **Solubilité à 70°C** | **Aspect de la solution après un retour à T ambiante** |
|---|---|---|---|---|
| | **DMSO** | **GBL** | | |
| A (comparatif) | 100 | - | Oui | Fluide |
| B (invention) | 65 | 35 | Oui | Fluide |
| C (invention) | 50 | 50 | Oui | Fluide |
| D (comparatif) | - | 100 | Pas de solubilisation observée | |

Au bout de quelques heures, le polymère est complètement dissous, sauf dans le cas de la solution D. Des solutions fluides sont obtenues pour les solutions A à C.

Il est également constaté que les solutions A à C présentent un aspect fluide après qu'elles aient été refroidies à température ambiante.

### b) Test de solubilité à T = -2°C

Les solutions sont ensuite stockées à basse température (-2°C) pendant plusieurs jours afin d'observer leur stabilité dans le temps.

Les résultats sont présentés dans le tableau 2 :

**Tableau 2**

| Solution | Temps à partir duquel une gélification de la solution est observée |
|---|---|
| A (comp.) | 2 heures |
| B (inv.) | Solution fluide après 6 jours |
| C (inv.) | Solution fluide après 6 jours |
| D (comp.) | Pas de solubilisation observée lors du test a) |

Ainsi, il est constaté que la solution A présente un aspect solide seulement deux heures après qu'elle ait été stockée à une température de -2°C. En effet, la solution gélifie très rapidement.

En revanche, les solutions B et C présentent toujours un aspect fluide après 6 jours de stockage à cette température. La solution est donc stable pendant au moins 6 jours.

Ainsi, le système solvant selon l'invention présente une amélioration de la stabilité de la solution polymère, montrant ainsi un avantage surprenant à utiliser ces deux solvants en mélange.

### Exemple 2 : solution comprenant du polyuréthane et un système solvant DMSO/GVL

### a) Test de solubilité à T = 70°C et à T ambiante

12,5 % en poids de polyuréthane Desmoderm^{®} KB2H sont introduits dans différents systèmes solvants comprenant du DMSO et de la γ-valérolactone (GVL), par rapport au poids total de la solution formée par le polymère et le système solvant.

Le mélange est chauffé à 70°C sous une légère agitation. La solubilité des solutions testées est évaluée.

Les solutions sont refroidies à température ambiante et l'aspect des solutions testées est évalué.

Les résultats sont présentés dans le tableau 3 :

**Tableau 3**

| **Solution comprenant 12,5% en poids de PU** | **Système solvant (% massique)** | | **Solubilité à 70°C** | **Aspect de la solution après un retour à T ambiante** |
|---|---|---|---|---|
| | **DMSO** | **GVL** | | |
| E (comparatif) | 100 | - | Oui | fluide |
| F (invention) | 50 | 50 | Oui | fluide |
| G (invention) | 30 | 70 | Oui | fluide |
| H (comparatif) | - | 100 | Pas de solubilisation observée | |

Au bout de quelques heures, le polymère est complètement dissous, sauf dans le cas de la solution H. Des solutions fluides sont obtenues pour les solutions E à G.

Il est également constaté que les solutions E à G présentent un aspect fluide après qu'elles aient été refroidies à température ambiante.

### b) Test de solubilité à T = -2°C

Les solutions sont ensuite stockées à basse température (-2°C) pendant plusieurs jours afin d'observer leur stabilité dans le temps.

Les résultats sont présentés dans le tableau 4 :

**Tableau 4**

| Solution | Temps à partir duquel une gélification de la solution est observée |
|---|---|
| E (comp.) | Solution figée après 1 semaine |
| F (inv.) | Solution stable après 1 semaine |
| G (inv.) | Solution stable après 1 semaine |
| H (comp.) | Pas de solubilisation observée lors du test a) |

Ainsi, il est constaté que la solution E présente un aspect figé seulement une semaine après qu'elle ait été stockée à une température de -2°C.

En revanche, les solutions F et G restent stables. après stockage à une température de -2°C.

Ainsi, le système solvant selon l'invention présente une amélioration de la stabilité de la solution polymère, montrant ainsi un avantage surprenant à utiliser ces deux solvants en mélange.

### Exemple 3 : solution comprenant du polyfluorure de vinylidène et un système solvant DMSO/GVL

### a) Test de solubilité à T = 70°C et à T ambiante

10 % en poids de polyfluorure de vinylidène Kynar^{®} K761 sont introduits dans différents systèmes solvants comprenant du DMSO et de la γ-valérolactone (GVL), par rapport au poids total de la solution formée par le polymère et le système solvant.

Le mélange est chauffé à 70°C sous une légère agitation. La solubilité des solutions testées est évaluée.

Les solutions sont refroidies à température ambiante et l'aspect des solutions testées est évalué.

Les résultats sont présentés dans le tableau 5 :

**Tableau 5**

| **Solution comprenant 10% en poids de PVDF** | **Système solvant (% massique)** | | **Solubilité à 70°C** | **Aspect de la solution après un retour à T ambiante** |
|---|---|---|---|---|
| | **DMSO** | **GVL** | | |
| I (comparatif) | 100 | - | Oui | fluide |
| J (invention) | 80 | 20 | Oui | fluide |
| K (invention) | 50 | 50 | Oui | fluide |
| L (comparatif) | - | 100 | Pas de solubilisation observée | |

Au bout de quelques heures, le polymère est complètement dissous, sauf dans le cas de la solution L. Des solutions fluides sont obtenues pour les solutions I à K.

Il est également constaté que les solutions I à K présentent un aspect fluide après qu'elles aient été refroidies à température ambiante.

### b) Test de solubilité à T ambiante dans le temps

Les solutions sont ensuite stockées à température ambiante pendant plusieurs jours afin d'observer leur stabilité dans le temps.

Les résultats sont présentés dans le tableau 6 :

**Tableau 6**

| Solution | Temps à partir duquel un trouble de la solution est observé |
|---|---|
| I (comp.) | Solution troublée après 1 semaine |
| J (inv.) | Solution incolore/transparente après 2 semaines |
| K (inv.) | Solution légèrement troublée après 2 semaines |
| L (comp.) | Pas de solubilisation observée lors du test a) |

Ainsi, il est constaté que la solution I présente un aspect troublé seulement une semaine après qu'elle ait été stockée à température ambiante.

En revanche, la solution K présente un aspect légèrement troublé deux semaines après qu'elle ait été stockée à température ambiante.

Enfin, la solution J présente toujours un aspect incolore et transparent au bout de deux semaines de stockage.

Ainsi, le système solvant selon l'invention présente une amélioration de la stabilité de la solution polymère, montrant ainsi un avantage surprenant à utiliser ces deux solvants en mélange.

### Exemple 4 : solution comprenant une polyéthersulfone et un système solvant DMSO/GBL

### a) Test de solubilité à T = 70°C et à T ambiante

15 % en poids de polyéthersulfone Ultrason^{®} E3010 sont introduits dans différents systèmes solvants comprenant du DMSO et de la γ-butyrolactone (GBL), par rapport au poids total de la solution formée par le polymère et le système solvant.

Le mélange est chauffé à 70°C sous une légère agitation. La solubilité des solutions testées est évaluée.

Les solutions sont refroidies à température ambiante et l'aspect des solutions testées est évalué.

Les résultats sont présentés dans le tableau 7 :

**Tableau 7**

| **Solution comprenant 15% en poids de PES** | **Système solvant (% massique)** | | **Solubilité à 70°C** | **Aspect de la solution après un retour à T ambiante** |
|---|---|---|---|---|
| | **DMSO** | **GBL** | | |
| M (comparatif) | 100 | - | Oui | liquide |
| N (invention) | 65 | 35 | Oui | liquide |
| O (invention) | 50 | 50 | Oui | liquide |
| P (comparatif) | - | 100 | Oui | Solide après 1 semaine |

Au bout de quelques heures, le polymère est complètement dissous et une solution fluide est obtenue pour toutes les solutions M à P.

Il est également constaté que les solutions M à O présentent un aspect fluide après qu'elles aient été refroidies à température ambiante pendant plusieurs semaines. Par contre, la solution P présente un aspect solide à température ambiante au bout d'une semaine.

### b) Test de solubilité à T = -2°C

Les solutions sont ensuite stockées à basse température (-2°C) pendant plusieurs jours afin d'observer leur stabilité dans le temps.

Les résultats sont présentés dans le tableau 8 :

**Tableau 8**

| | Temps à partir duquel une gélification de la solution est observée |
|---|---|
| M (comp.) | 2 heures |
| N (inv.) | Solution toujours liquide après 3 semaines |
| O (inv.) | Solution toujours liquide après 1 semaine |
| P (comp.) | ≤ 15 minutes |

Ainsi, on peut constater que la solution M présente un aspect solide seulement deux heures après qu'elle ait été stockée à une température de -2°C. En effet, la solution gélifie très rapidement.

Par ailleurs, la solution P présente un aspect solide à température ambiante très rapidement.

En revanche, la solution O présente un aspect toujours liquide une semaine après qu'elle ait été stockée à une température de -2°C.

Enfin, la solution N présente toujours un aspect liquide trois semaines après qu'elle ait été stockée à une température de -2°C.

Ainsi, le système solvant selon l'invention présente une amélioration de la stabilité de la solution polymère, montrant ainsi un avantage surprenant à utiliser ces deux solvants en mélange.

### Exemple 5 : solution comprenant une polysulfone et un système solvant DMSO/GVL

### a) Test de solubilité à T = 70°C et à T ambiante

10 % en poids de polysulfone (PSU) Solvay Udel^{®} P-3500 sont introduits dans différents systèmes solvants comprenant du DMSO et de la γ-valérolactone (GVL), par rapport au poids total de la solution formée par le polymère et le système solvant.

Le mélange est chauffé à 70°C sous une légère agitation. La solubilité des solutions testées est évaluée.

Les solutions sont refroidies à température ambiante et l'aspect des solutions testées est évalué.

Les résultats sont présentés dans le tableau 9 :

**Tableau 9**

| **Solution comprenant 10% en poids de PSU** | **Système solvant (% massique)** | | **Solubilité à 70°C** | **Aspect de la solution après un retour à T ambiante** |
|---|---|---|---|---|
| | **DMSO** | **GVL** | | |
| Q (comparatif) | 100 | - | Oui | gélifié |
| R (invention) | 50 | 50 | Oui | fluide |
| S (invention) | 30 | 70 | Oui | fluide |
| T (comparatif) | - | 100 | Oui | fluide |

Au bout de quelques heures, le polymère est complètement dissous et une solution fluide est obtenue pour toutes les solutions Q à T.

Il est également constaté que les solutions R à T présentent un aspect fluide après qu'elles aient été refroidies à température ambiante sauf pour la solution Q qui présente un aspect gélifié

### b) Test de solubilité à T = -2°C

Les solutions sont ensuite stockées à basse température (-2°C) pendant plusieurs jours afin d'observer leur stabilité dans le temps.

Les résultats sont présentés dans le tableau 10 :

**Tableau 10**

| Solution | Temps à partir duquel une gélification de la solution est observée |
|---|---|
| Q (comp.) | Solution gélifiée à température ambiante |
| R (inv.) | Solution légèrement visqueuse après 1 semaine |
| S (inv.) | Solution fluide après 3 semaines |
| T (comp.) | Solution figée après 1 semaine |

Ainsi, il est constaté que la solution T présente un aspect figé seulement une semaine après qu'elle ait été stockée à une température de -2°C.

En revanche, la solution R présente un aspect visqueux une semaine après qu'elle ait été stockée à une température de -2°C.

Enfin, la solution S présente toujours un aspect fluide une semaine après qu'elle ait été stockée à une température de -2°C, cet aspect fluide pouvant en outre toujours être observé après trois semaines de stockage.

Ainsi, le système solvant selon l'invention présente une amélioration de la stabilité de la solution polymère, montrant ainsi un avantage surprenant à utiliser ces deux solvants en mélange.

## Revendications

1. Utilisation d'un système solvant pour la solubilisation de polymères fluorés ou de polymères comprenant au moins une double liaison X=O, X étant choisi parmi l'atome de soufre, l'atome de carbone, un groupement N-C et un groupement O-C, **caractérisé en ce que** ledit système solvant consiste en :
- de 30 à 95% en poids d'une composition (A) par rapport au poids total du système solvant, en particulier de 30 à 80% en poids et plus particulièrement, de 30 à 65% en poids, ladite composition A comprenant plus de 95% en poids de diméthylsulfoxyde (DMSO) par rapport au poids total de la composition ; et
- de 5 à 70% en poids d'une composition (B) par rapport au poids total du système solvant, en particulier de 20 à 70% en poids et plus particulièrement, de 35 à 70% en poids, ladite composition B consistant en une lactone ou un mélange de lactones.

2. Utilisation selon la revendication 1, dans laquelle les polymères sont choisis parmi les polyuréthanes, les polyéthersulfones, les polysulfones, les poly(fluorures de vinylidène), les acétates de de cellulose, les polyesters, les polyamides, les polyamides imides et les polyimides, de préférence choisis parmi les polyuréthanes, les polyéthersulfones et les polysulfones.

3. Utilisation selon l'une des revendications 1 ou 2, dans laquelle ladite lactone comprend de 4 à 12 atomes de carbone, ladite lactone étant saturée ou non, et éventuellement substituée par un ou plusieurs chaînes alkyles en C₁-C₁₀.

4. Utilisation selon l'une des revendications 1 à 3, dans laquelle ladite lactone est choisie parmi la γ-butyrolactone, la γ-pentalactone, la γ-hexalactone, la γ-octalactone, la δ-octalactone, la γ-décalactone, la δ-décalactone, la γ-dodécalactone, la δ-dodécalactone, la 6-amyl-α-pyrone, la δ-valérolactone, la γ-valérolactone, la ε-caprolactone, la coumarine et l'acide ascorbique, de préférence choisie parmi la γ-butyrolactone et la γ-valérolactone et leur mélange.

5. Utilisation selon l'une des revendications 1 à 4, dans laquelle ladite lactone ou le mélange des lactones présente un point d'ébullition compris entre 150 et 250°C sous pression atmosphérique.

6. Utilisation selon l'une des revendications 1 à 5, dans laquelle ladite lactone est soluble dans l'eau en formant une solution homogène lorsqu'au moins 30 g de lactone(s) sont dissous dans un litre d'eau à 20°C et à pression atmosphérique après 30 mn d'agitation.

7. Utilisation selon l'une des revendications 1 à 6 pour la fabrication de films, de cuirs artificiels, de daims polymères, de fibres polymères, de revêtements, de membranes, pour la protection de câbles électriques, et dans la fabrication de batteries et de circuits électroniques.

## Patentansprüche

1. Verwendung eines Lösungsmittelsystems zur Solubilisierung von Fluorpolymeren oder Polymeren mit mindestens einer X=O-Doppelbindung, wobei X aus dem Schwefelatom, dem Kohlenstoffatom, einer N-C-Gruppe und einer O-C-Gruppe ausgewählt ist, **dadurch gekennzeichnet, dass** das Lösungsmittelsystem aus
- 30 bis 95 Gew.-% einer Zusammensetzung (A), bezogen auf das Gesamtgewicht des Lösungsmittelsystems, insbesondere 30 bis 80 Gew.-% und spezieller 30 bis 65 Gew.-%, wobei die Zusammensetzung A mehr als 95 Gew.-% Dimethylsulfoxid (DMSO), bezogen auf das Gesamtgewicht der Zusammensetzung, umfasst; und
- 5 bis 70 Gew.-% einer Zusammensetzung (B), bezogen auf das Gesamtgewicht des Lösungsmittelsystems, insbesondere 20 bis 70 Gew.-% und spezieller 35 bis 70 Gew.-%, wobei die Zusammensetzung B aus einem Lacton oder einer Mischung von Lactonen besteht; besteht.

2. Verwendung nach Anspruch 1, wobei die Polymere aus Polyurethanen, Polyethersulfonen, Polysulfonen, Poly(vinylidenfluoriden), Celluloseacetaten, Polyestern, Polyamiden, Polyamidimiden und Polyimiden ausgewählt sind und vorzugsweise aus Polyurethanen, Polyethersulfonen und Polysulfonen ausgewählt sind.

3. Verwendung nach Anspruch 1 oder 2, wobei das Lacton 4 bis 12 Kohlenstoffatome umfasst, wobei das Lacton gesättigt oder ungesättigt und gegebenenfalls durch eine oder mehrere C₁-C₁₀-Alkylketten substituiert ist.

4. Verbindung nach einem der Ansprüche 1 bis 3, wobei das Lacton aus γ-Butyrolacton, γ-Pentalacton, γ-Hexalacton, γ-Octalacton, δ-Octalacton, γ-Decalacton, δ-Decalacton, γ-Dodecalacton, δ-Dodecalacton, 6-Amyl-α-pyron, δ-Valerolacton, γ-Valerolacton, ε-Caprolacton, Cumarin und Ascorbinsäure ausgewählt ist und vorzugsweise aus γ-Butyrolacton und γ-Valerolacton und einer Mischung davon ausgewählt ist.

5. Verwendung nach einem der Ansprüche 1 bis 4, wobei das Lacton bzw. die Mischung von Lactonen einen Siedepunkt zwischen 150 und 250 °C bei Normaldruck aufweist.

6. Verwendung nach einem der Ansprüche 1 bis 5, wobei das Lacton beim Lösen von mindestens 30 g Lacton(en) in einem Liter Wasser bei 20 °C und Normaldruck nach 30 min Rühren unter Bildung einer homogenen Lösung in Wasser löslich ist.

7. Verbindung nach einem der Ansprüche 1 bis 6 zur Herstellung von Folien, Kunstleder, Polymerwildleder, Polymerfasern, Beschichtungen, Membranen, zum Schutz von Elektrokabeln und bei der Herstellung von Batterien und elektronischen Schaltungen.

## Claims

1. The use of a solvent system for the dissolution of fluoropolymers or of polymers comprising at least one X=O double bond, X being chosen from the sulfur atom, the carbon atom, an N-C group and an O-C group, wherein said solvent system consists of:
- from 30% to 95% by weight of a composition (A) comprising dimethyl sulfoxide (DMSO), with respect to the total weight of the solvent system, preferably from 5% to 80% by weight, in particular from 30% to 80% by weight and more particularly from 30% to 65% by weight; and
- from 5% to 70% by weight of a composition (B) consisting of one lactone or a mixture of lactones, with respect to the total weight of the solvent system, preferably from 20% to 70% by weight, in particular from 35% to 70% by weight and more particularly from 35% to 70% by weight.

2. The use as claimed in claim 1, in which the polymers are chosen from polyurethanes, polyethersulfones, polysulfones, poly(vinylidene fluoride)s, cellulose acetates, polyesters, polyamides, polyamide-imides and polyimides, preferably chosen from polyurethanes, polyethersulfones and polysulfones.

3. The use as claimed in any of claims 1 or 2, in which said lactone comprises from 4 to 12 carbon atoms, said lactone being saturated or unsaturated and optionally substituted by one or more C1-C10 alkyl chains.

4. The use as claimed in any of claims 1 to 3, in which said lactone is chosen from γ-butyrolactone, γ-pentalactone, γ-hexalactone, γ-octalactone, δ-octalactone, γ-decalactone, δ-decalactone, γ-dodecalactone, δ-dodecalactone, 6-amyl-α-pyrone, δ-valerolactone, γ-valerolactone, ε-caprolactone, coumarin and ascorbic acid, preferably chosen from γ-butyrolactone and γ-valerolactone, and their mixture.

5. The use as claimed in any of claims 1 to 4, in which said lactone or the mixture of lactones exhibits a boiling point of between 150 and 250°C, at atmospheric pressure.

6. The use as claimed in any of claims 1 to 5, in which said lactone is soluble in water by forming a homogeneous solution when at least 30 g of lactone(s) are dissolved in one liter of water at 20°C and at atmospheric pressure after stirring for 30 min.

7. The use as claimed in any of claims 1 to 6, for the manufacture of films, artificial leather, polymer suede, polymer fibers, coatings or membranes, for the protection of electric cables and in the manufacture of batteries and electronic circuits.
